# EUROPEAN PATENT APPLICATION

(11) **EP 3 708 695 A1**
(43) Date of publication of application: **16.09.2020**
(21) Application number: 18875773.6
(22) Date of filing: 06.11.2018
(51) Int. Cl.: C23C 8/22, C21D 1/06, C21D 1/74

(54) **GAS CARBURIZATION DEVICE AND GAS CARBURIZATION METHOD**

(30) Priority: 08.11.2017 JP 2017215743
(71) Applicant: DENSO CORPORATION, Kariya-city, Aichi 448-8661 (JP)
(72) Inventor: KITA Takuya, Kariya-city Aichi 448-8661 (JP); ASAOKA Junya, Kariya-city Aichi 448-8661 (JP)
(74) Representative: Kuhnen & Wacker Patent- und Rechtsanwaltsbüro PartG mbB
(86) International application number: PCT/JP2018/041085
(87) International publication number: WO 2019/093290

(57) **Abstract**

A gas carburizing apparatus (1) includes a carburizing container (2), a rotation support member (3), an induction heating coil (4), an inner injection nozzle (51A), and an outer injection nozzle (52). The carburizing container (2) houses a workpiece (7) having a cylindrical portion (71). The rotation support member (3) is for rotating the workpiece (7) around a center axis (O1) of the cylindrical portion (71). The induction heating coil (4) is for induction-heating the workpiece (7). The inner injection nozzle (51A) is arranged in the carburizing container (2), and injects an inner carburizing gas (G) to thereby cause the inner carburizing gas to collide with an inner circumferential surface (711) of the cylindrical portion (71). The outer injection nozzle (52) is arranged in the carburizing container (2), and injects an outer carburizing gas (G) to thereby cause the outer carburizing gas to collide with an outer circumferential surface (712) of the cylindrical portion (71).

## Description

### [Cross-Reference to Related Applications]

This application is based on and claims priority from Japanese Patent Application No. 2017-215743 filed on November 8, 2017, the contents of which are incorporated herein by reference.

### [Technical Field]

The present disclosure relates to a gas carburizing apparatus and a gas carburizing method that perform gas carburizing of a rotating workpiece.

### [Background Art]

Gas carburizing methods cause carbon or other similar materials to be in a solid-state solution in a surface of a workpiece that is a steel material. Such a gas carburizing method, in many cases, uses large carburizing equipment including, for example, a conversion furnace for generating atmospheric gas and a carburizing furnace to which the atmospheric gas is supplied.

A workpiece is arranged in the atmospheric gas in the carburizing furnace and heated, so that carbon or another similar material is diffused and permeated into a surface of the workpiece.

For example, a gas permeation heat treatment apparatus described in Patent Literature 1 uses a small heating furnace, and supplies carburizing gas toward a workpiece in the heating furnace. More specifically, Patent Literature 1 performs gas carburizing that
1. Rotates two shafts on which a dis-shaped workpiece is placed to thereby rotate the disk-shaped workpiece
2. Heats the rotating discotic workpiece using an induction heating coil
3. Supplies carburizing gas to the discotic workpiece disposed in the heating furnace from above the discotic workpiece

### [Citation List]

### [Patent Literature]

[PTL 1] JP 2015-160990 A

### [Summary]

For performing gas carburizing to a workpiece having a hollow cylindrical, i.e. tubular cylindrical, portion using such a small heating furnace, it is necessary to devise how to perform gas carburizing.

Specifically, let us assume a case where we perform gas carburizing to a workpiece having a hollow cylindrical portion using the gas permeation heat treatment apparatus disclosed in Patent Literature 1. In this assumption, the carburizing gas is sufficiently supplied to the outer circumferential surface of the hollow cylindrical portion of the workpiece, but the carburizing gas may be insufficiently supplied to the inner circumferential surface of the hollow cylindrical portion of the workpiece, resulting in the inner circumferential surface of the hollow cylindrical portion of the workpiece being insufficiently carburized.

In addition, the gas permeation heat treatment apparatus of Patent Literature 1 is configured such that the carburizing gas, which has flowed into the heating furnace through a supply hole provided in a supply flow path, flows out of the heating furnace through a discharge port provided in a discharge flow path. That is, the conventional gas permeation heat treatment apparatus fails to consider or motivate measures of causing the carburizing gas to collide with one or more portions of the workpiece, which are required to be carburized.

The present disclosure, which has been produced, aims to provide gas carburizing apparatuses and gas carburizing methods, each of which is capable of performing gas carburizing of both an inner circumferential surface and an outer circumferential surface of a hollow cylindrical portion of a workpiece as uniformly as possible.

A first aspect of the present disclosure is a gas carburizing apparatus. The gas carburizing apparatus includes a carburizing container that houses a workpiece having a cylindrical portion that has a center axis, an inner circumferential surface, and an outer circumferential surface. The gas carburizing apparatus includes a rotation support member for rotating the workpiece around the center axis of the cylindrical portion, and an induction heating coil for induction-heating the workpiece. The gas carburizing apparatus includes at least one inner injection nozzle arranged in the carburizing container and configured to inject an inner carburizing gas to thereby cause the inner carburizing gas to collide with the inner circumferential surface of the cylindrical portion. The gas carburizing apparatus includes an outer injection nozzle arranged in the carburizing container and configured to inject an outer carburizing gas to thereby cause the outer carburizing gas to collide with the outer circumferential surface of the cylindrical portion.

A second aspect of the present disclosure is a gas carburizing method. The gas carburizing method includes rotating a workpiece, which has a center axis, an inner circumferential surface, and an outer circumferential surface, around the center axis using a rotation support member, and induction-heating the rotating workpiece using an induction heating coil. The gas carburizing method includes causing an inner carburizing gas injected from an inner injection nozzle to collide with the inner circumferential surface of the cylindrical portion to perform gas carburizing of the inner circumferential surface. The gas carburizing method includes causing an outer carburizing gas injected from an outer circumferential injection nozzle to collide with the outer circumferential surface of the cylindrical portion to perform gas carburizing of the outer circumferential surface.

The gas carburizing apparatus of the first aspect of the present disclosure includes special nozzles specialized for performing gas carburizing of such a workpiece having a cylindrical portion. Specifically, the gas carburizing apparatus includes, in the carburizing container, the inner injection nozzle configured to inject the inner carburizing gas to thereby cause the inner carburizing gas to collide with the inner circumferential surface of the cylindrical portion, and the outer injection nozzle configured to inject an outer carburizing gas to thereby cause the outer carburizing gas to collide with the outer circumferential surface of the cylindrical portion.

This causes a carburizing component, such as carbon, in the inner carburizing gas injected from the inner injection nozzle to be mainly permeated into the inner circumferential surface of the cylindrical portion, and a carburizing component, such as carbon in the outer carburizing gas, injected from the outer injection nozzle to be mainly permeated into the outer circumferential surface of the cylindrical portion.

In performing gas carburizing of such a workpiece, the rotation support member rotates the workpiece, and the induction heating coil heats the rotating workpiece. The inner carburizing gas injected from the inner injection nozzle collides with the entire inner circumferential surface of the cylindrical portion of the rotating workpiece, and the carburizing gas injected from the outer injection nozzle collides with the entire outer circumferential surface of the cylindrical portion of the rotating workpiece. This configuration appropriately diffuses and permeates the carburizing component of each of the inner and outer carburizing gases, which has collided at an appropriate injection flow rate with the corresponding one of the entire inner circumferential surface and the entire outer circumferential surface of the cylindrical portion, in the corresponding one of the entire inner circumferential surface and the entire outer circumferential surface of the cylindrical portion.

The gas carburizing apparatus of the first aspect of the present disclosure therefore makes it possible to perform gas carburizing of each of the inner circumferential surface and the outer circumferential surface of the cylindrical portion of the workpiece as uniformly as possible.

Similarly, the gas carburizing method of the second aspect of the present disclosure achieves the same effects as those achieved by the gas carburizing apparatus of the first aspect. The gas carburizing method of the second aspect of the present disclosure therefore makes it possible to perform gas carburizing of each of the inner circumferential surface and the outer circumferential surface of the cylindrical portion of the workpiece as uniformly as possible.

Each parenthesized reference numeral of a corresponding component shown in each of the first and second aspects of the present disclosure represents a correspondence relationship with reference to a corresponding numeral in the drawings of the following embodiments, but do not limit the corresponding component to the disclosure of the corresponding one of the first and second embodiments.

### [Brief Description of the Drawings]

Objects, features, advantages, and the like of the present disclosure will be more clarified by the following detailed description with reference to the accompanying drawings. The drawings of the present disclosure are as follows:
Fig. 1 is a cross-sectional explanatory view showing a gas carburizing apparatus according to the first embodiment.
Fig. 2 is a cross-sectional explanatory view showing the gas carburizing apparatus when viewed from a first side of an axial direction according to the first embodiment.
Fig. 3 is a cross-sectional explanatory view showing the gas carburizing apparatus when viewed from a second side of the axial direction according to the first embodiment.
Fig. 4 is a cross-sectional explanatory view showing a workpiece according to the first embodiment.
Fig. 5 is an explanatory view showing the workpiece when viewed from the first side of the axial direction according to Embodiment 1.
Fig. 6 is an explanatory view showing the workpiece when viewed from the second side of the axial direction according to first embodiment.
Fig. 7 is a graph showing a measurement result of concentration of carbon in a surface of the workpiece subjected to gas carburizing according to the first embodiment.
Fig. 8 is a graph showing a relationship between an injection flow rate from each injection nozzle and a corresponding solid solubility limit surface area according to the first embodiment.
Fig. 9 is a cross-sectional explanatory view showing a workpiece according to the second embodiment.
Fig. 10 is an explanatory view showing the workpiece when viewed from the first side of the axial direction according to the second embodiment.
Fig. 11 is an explanatory view showing the workpiece when viewed from the second side of the axial direction according to the second embodiment.
Fig. 12 is a cross-sectional explanatory view showing a workpiece according to the third embodiment.
Fig. 13 is an explanatory view showing the workpiece when viewed from the first side of the axial direction according to the third embodiment.
Fig. 14 is an explanatory view showing the workpiece when viewed from the second side of the axial direction according to the third embodiment.
Fig. 15 is a cross-sectional explanatory view showing a gas carburizing apparatus according to one modification.
Fig. 16 is a cross-sectional explanatory view showing a conventional gas carburizing apparatus, i.e. a comparison product, according to a comparative demonstrate test.
Fig. 17 is a graph showing a measurement result of hardness of a surface of a workpiece subjected to gas carburizing using the gas carburizing apparatus, i.e. an implemented product, of the first embodiment as a result of execution of a demonstrate test.
Fig. 18 is a graph showing a measurement result of hardness of a surface of a workpiece subjected to gas carburizing using the conventional gas carburizing apparatus, i.e. the comparative product, as a result of execution of the comparative demonstration test.

### [Description of the Embodiments]

The following describes preferred embodiments of gas carburizing apparatus and gas carburizing method with reference to the accompanying drawings.

### First embodiment

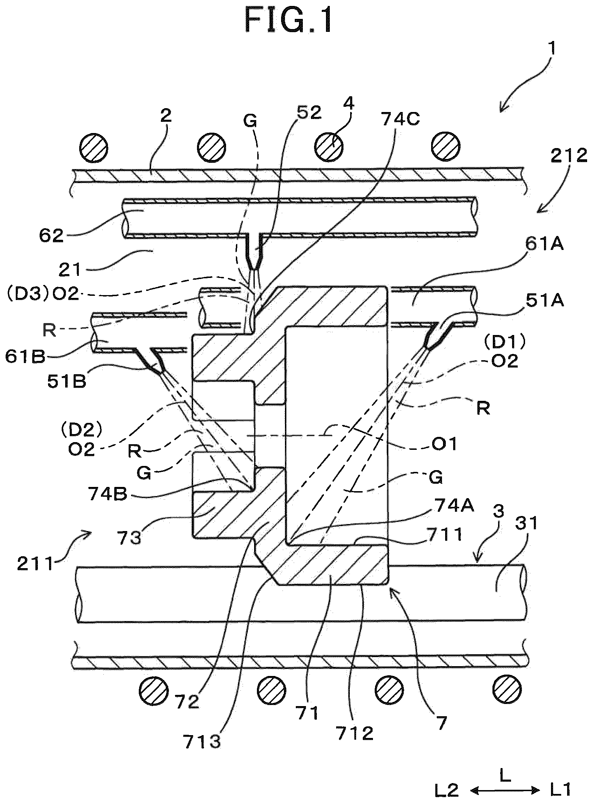

As shown in Figs. 1 to 3, a gas carburizing apparatus 1 of the first embodiment includes a carburizing container 2, a rotation support member 3, an induction heating coil 4, an inner circumferential injection nozzle 51A, and an outer circumferential injection nozzle 52.

The carburizing container 2 is configured to house a workpiece 7 having a hollow cylindrical, i.e. tubular cylindrical, portion 71; the workpiece 7 is subjected to gas carburizing.

The rotation support member 3 is configured to rotatably support the workpiece 7 around a center axis O1 of the cylindrical portion 71.

The induction heating coil 4 is arranged to surround an outer circumferential surface of the workpiece 7 in a spiral shape, and is configured to perform induction-heating of the workpiece 7.

The inner circumferential injection nozzle 51A is arranged in the carburizing container 2, and injects carburizing gas G to cause the carburizing gas G to collide with an inner circumferential surface 711 of the cylindrical portion 71. The outer circumferential injection nozzle 52 is arranged in the carburizing container 2, and injects carburizing gas G to cause the carburizing gas G to collide with an outer circumferential surface 712 of the cylindrical portion 71.

A gas carburizing method of the present embodiment performs induction heating of the workpiece 7 using the induction heating coil 4 while causing the rotation support member 3 to rotate the workpiece 7, which has the cylindrical portion 71, around the center axis O1 of the cylindrical portion 71.

During the induction-heating of the workpiece 7, the gas carburizing method causes the inner circumferential injection nozzle 51A to inject the carburizing gas G toward the inner circumferential surface 711 of the cylindrical portion 71, thus causing the carburizing gas G injected from the inner circumferential injection nozzle 51A to collide with the inner circumferential surface 711 of the cylindrical portion 71. This results in gas carburizing of the inner circumferential surface 711.

During the induction-heating of the workpiece 7, the gas carburizing method also causes the outer circumferential injection nozzle 52 to inject the carburizing gas G toward the outer circumferential surface 712 of the cylindrical portion 71, thus causing the carburizing gas G injected from the outer circumferential injection nozzle 52 to collide with the outer circumferential surface 712 of the cylindrical portion 71. This results in gas carburizing of the outer circumferential surface 712.

The following describes in detail the gas carburizing apparatus 1 and the gas carburizing method of the present embodiment below.

### Gas carburizing apparatus 1

The gas carburizing apparatus 1 and the gas carburizing method aim to form, on a surface of the workpiece 7, a carburized hardened layer having a predetermined hardness; the workpiece 7 is a selected one of various steel materials. For achieving such an object, the gas carburizing apparatus 1 and the gas carburizing method causes carbon to be diffused and permeated into the surface of the workpiece 7. During the diffusion and permeation of the carbon, the gas carburizing apparatus 1 and the gas carburizing method heat the workpiece 7, resulting in the workpiece 7 being carburized and quenched.

When performing gas carburizing, the gas carburizing apparatus 1 and the gas carburizing method perform a carburizing step, a diffusion step, and a cooling step.

In the carburizing step, the workpiece 7 is heated to a heat treatment temperature at which a metal structure of the workpiece 7 becomes an austenite structure, and a chemical reaction occurs between the carburizing gas G and the surface of the workpiece 7.

In the diffusion step, carbon as a carburizing component in the carburizing gas G is diffused inward from a surface of the workpiece 7.

In the cooling step, the heated workpiece 7 is rapidly cooled, so that the metal structure of the workpiece 7 becomes a martensite structure, resulting in the gas carburizing being completed. After the gas carburizing, the concentration of carbon near the surface of the workpiece 7 being higher than that of carbon inside the workpiece 7.

In the present embodiment, the gas carburizing refers to a process of diffusing and permeating carbon in a surface of the workpiece 7. Alternatively, the gas carburizing can be configured to perform a process of diffusing and permeating carbon and nitrogen in a surfaced of the workpiece 7.

### Workpiece 7

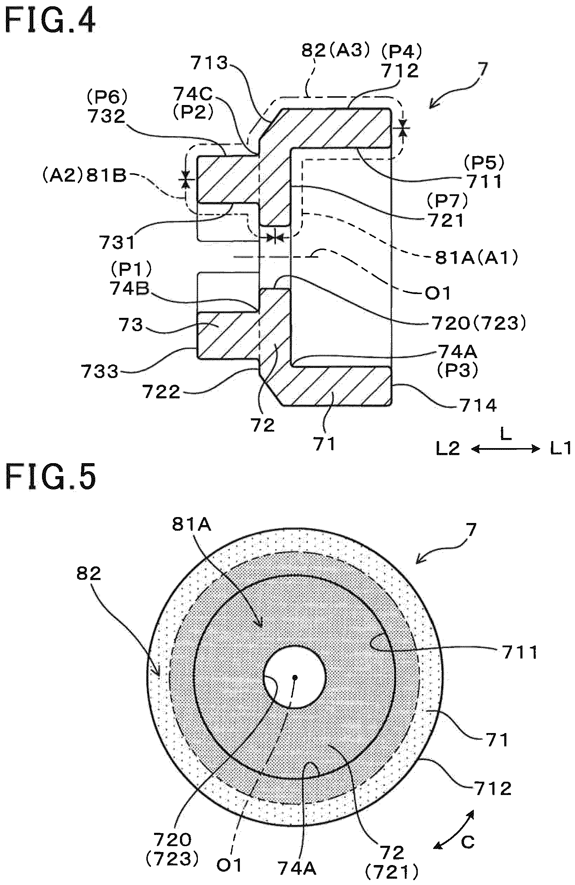

As shown in Figs. 4 to 6, the workpiece 7 of the present embodiment has a bottomed tubular cylindrical shape. The workpiece 7 has the cylindrical portion 71, a crossover portion 72, and convex portions 73.

The workpiece 7 has an axial direction L that has first and second opposite sides L1 and L2 opposite to each other, so that the tubular cylindrical portion 71 of the workpiece 7 has a first end, i.e. a first-side (L1) end, directed to the first side L1 of the axial direction L, and a second end, i.e. a second-side (L2) end directed to the second side L2 of the axial direction L; the first-side end is opposite to the second-side end in axial direction L thereof.

The crossover portion 72 is configured as a bottom portion or a joint portion joined to an inner peripheral side of the second-side end of the cylindrical portion 71. Each convex portion 73 is configured to be protruded from the crossover portion 72 toward the second side L2 of the axial direction L.

The crossover portion 72 has a through hole 720 formed through a center portion thereof. The convex portions 73 (four in the present embodiment) are arranged at equal intervals around the center axis O1 of the cylindrical portion 71.

Each of the convex portions 73 has a columnar shape, and has first and second ends in the axial direction L. Each of the convex portions 73 has formed a reduced-diameter portion 713 at the second end thereof in the axial direction L71. The reduced-diameter portion 713 has a tapered shape such that a diameter of the reduced-diameter portion 713 is reduced toward the second side L2 of the axial direction L.

### Carburizing container 2, rotation support member 3, induction heating coil 4

As shown in Fig. 1, the carburizing container 2 of the gas carburizing apparatus 1 is configured to have a hollow cylindrical shape, and the center axis O1 of the cylindrical carburizing container 2 is directed in a horizontal direction.

The carburizing container 2 includes a housing chamber 21 formed therein. The housing chamber 21 houses the workpiece 7 therein.

The housing chamber 21 has opposing first and second sides in the horizontal direction. The housing chamber 21 has an inlet 211 for the workpiece 7; the inlet 211 has formed through the first end of the housing chamber 21, and has an outlet 212 for the workpiece 7; the outlet 212 has formed through the second end of the housing chamber 21.

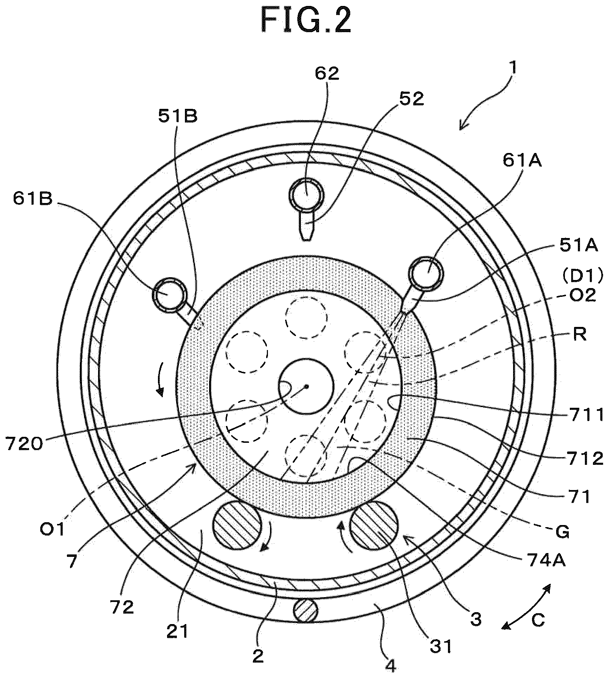

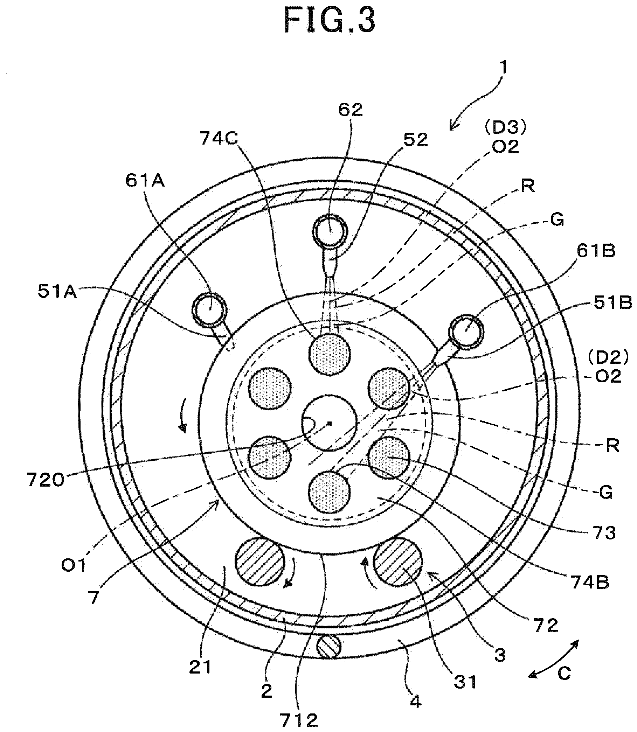

As shown in Figs. 2 and 3, the rotation support member 3 is composed of a pair of rotation shaft members 31 that are disposed to be parallel to each other such that the workpiece 7 is mountable on the rotation shaft members 31.

The pair of rotation shaft members 31 is arranged at a lower portion of the housing chamber 21 of the carburizing container 2. At least one of the rotation shaft members 31 is connected to a drive source, such as a motor, that provides rotational force to the at least one of the rotation shaft members 31.

Rotation of the rotation shaft members 31 in the same direction causes the workpiece 7 placed on the rotation shaft members 31 to rotate in a predetermined direction.

The rotation shaft members 31 are configured to be rotated while being abutted, from below, on the outer circumferential surface 712 of the cylindrical portion 71, thus rotating the workpiece 7. The workpiece 7 is rotated while the cylindrical portion 71 is in rolling contact with the rotation shaft members 31.

The rotation shaft members 31 are configured to be slidable in the axial direction L of the housing chamber 21. This slidable movement of the rotation shaft member 31 enables the workpiece 7 to be carried in and carried out of the housing chamber 21. The rotation support member 3 comprised of simply the pair of rotation shaft members 31 enables the workpiece 7 to be rotated and transferred.

The axial direction L refers to not only the axial direction of the cylindrical portion 71 of the workpiece 7 but also, for example, the axial direction of the carburizing container 2, the pair of rotation shaft members 31, the induction heating coil 4 in the gas carburizing apparatus 1.

The induction heating coil 4 is comprised of a spiral conductor, and is configured to generate magnetic flux inside the spiral conductor when energized. The generated magnetic flux passing through the workpiece 7 induces eddy currents in the workpiece 7, so that the workpiece 7 is heated by the eddy currents. The induction heating coil 4 is arranged to face the outer circumferential surface 712 of the carburizing container 2 so that the carburizing container 2 is arranged inside the induction heating coil 4.

### Inner circumferential injection nozzles 51A and 51B, and outer circumferential injection nozzle 52

As shown in Figs. 1 to 3, the inner circumferential injection nozzle 51A, an inner circumferential injection nozzle 51B, and the outer circumferential injection nozzle 52 of the present embodiment are arranged at an upper portion of the housing chamber 21 of the carburizing container 2, and are each configured to inject the carburizing gas G downward or obliquely downward.

Specifically, the outer circumferential injection nozzle 52 is configured to inject the carburizing gas G downward to cause the carburizing gas G to collide with an upper portion of the outer circumferential surface 712 of the cylindrical portion 71 of the workpiece 7. For example, in the present embodiment, the carburizing gas G injected from the outer circumferential injection nozzle 52 collides with an upper portion of the outer circumferential surface 712 of the reduced-diameter portion 713.

The inner circumferential injection nozzles 51A and 51B are respectively configured as first and second circumferential injection nozzles 51A and 51B, and capable of injecting the respective carburizing gases G to different inner peripheral portions of the workpiece 7.

The first inner circumferential injection nozzle 51A is configured to be inclined to extend from the vicinity of the first-side (L1) end of the cylindrical portion 71 toward the center side of the cylindrical portion 71 in the axial direction L. The first inner circumferential injection nozzle 51A is also configured to inject the carburizing gas G while being in the inclined state. For example, the first inner circumferential injection nozzle 51A is arranged above the vicinity of the first-side (L1) end of the workpiece 7 in the axial direction L, and injects the carburizing gas G obliquely downward toward the workpiece 7.

In other words, an injection center axis 02 of the carburizing gas G injected from the first inner circumferential injection nozzle 51A is directed toward the workpiece 7 and inclined to extend toward the center side of the workpiece 7 in the axial direction L. The carburizing gas G injected from the first inner circumferential injection nozzle 51A collides with a first concave inner corner 74A, which will be described later, arranged at an internally lower portion of the rotating workpiece 7.

The second inner circumferential injection nozzle 51B is configured to be inclined to extend from the vicinity of the second-side (L2) end of the cylindrical portion 71 toward the center side of the cylindrical portion 71 in the axial direction L. The second inner circumferential injection nozzle 51B is also configured to inject the carburizing gas G while being in the inclined state. For example, the second inner circumferential injection nozzle 51B is arranged above the vicinity of the second-side (L2) end of the workpiece 7 in the axial direction L, and injects the carburizing gas G obliquely downward toward the workpiece 7.

In other words, an injection center axis 02 of the carburizing gas G injected from the second inner circumferential injection nozzle 51B is directed toward the workpiece 7 and inclined to extend toward the center side of the workpiece 7 in the axial direction L. The carburizing gas G injected from the second inner circumferential injection nozzle 51B collides with second concave inner corners 74B, which will be described later, arranged at an internally lower portion of the rotating workpiece 7.

As shown in Figs. 1 to 3, the outer circumferential injection nozzle 52, the first inner circumferential injection nozzle 51A, and the second inner circumferential injection nozzle 51B, which will be respectively referred to as first inner injection nozzle 51A, a second inner injection nozzle 51B, and an outer injection nozzle 52, are respectively provided in separate pipes 61A, 61B, and 62 that are arranged in an upper portion of the housing chamber 21. Each of the nozzles 51A, 51B, and 52 is configured to inject an individually determined injection flow rate of the corresponding carburizing gas G.

The outer injection nozzle 52 is branched downward from the outer peripheral pipe 62. The first inner injection nozzle 51A is branched from the pipe 61A, which will be referred to as a first inner peripheral pipe 61A, and inclined downward to extend toward the second-side (L2) end of the workpiece 7 in the axial direction L. The second inner injection nozzle 51B is branched from the pipe 61B, which will be referred to as a second inner peripheral pipe 61B, and inclined downward to extend toward the second-side (L2) end of the workpiece 7 in the axial direction L.

In the housing chamber 21, the outer peripheral pipe 62, the first inner peripheral pipe 61A, and the second inner peripheral pipe 61B are arranged in the axial direction L of the carburizing container 2.

The outer peripheral pipe 62 and the outer injection nozzle 52 are arranged at the upper portion of the housing chamber 21.

The first inner peripheral pipe 61A and the first inner injection nozzle 51A are arranged to bs shifted from the upper portion of the housing chamber 21 toward a first side of a circumferential direction C of the workpiece 7.

The second inner peripheral pipe 61B and the second inner injection nozzle 51B are arranged to be shifted from the upper portion of the housing chamber 21 toward a second side, which is opposite to the first side, of the circumferential direction C of the workpiece 7.

The outer peripheral pipe 62 and the inner pipes 61A and 62B can be arranged in the upper half of the housing chamber 21.

In the lower half of the housing chamber 21, the rotation support member 3 is arranged. This enables the pipes 61A, 61B, and 62 to be arranged in the upper half of the housing chamber 21, resulting in effective utilization of the space in the housing chamber 21.

The arrangement direction and injection flow rate of each of the nozzles 52, 51A, and 51B are determined, in accordance with the shape of the workpiece 7, to enable the entire surface of the workpiece 7 to be carburized by the carburizing gas G with a solid solubility limit concentration.

The solid solubility limit concentration refers to a limit of concentration at which, when the carburizing gas G is in contact with the surface of the workpiece 7, carbon in the carburizing gas G can be diffused and permeated into the surface of the workpiece 7. The solid solubility limit concentration can be determined by the fact that, when the carburizing gas G is sufficiently in contact with the surface of the workpiece 7, a concentration of carbon in the surface of the workpiece 7 becomes to be within a substantially constant concentration range.

The solid solubility limit concentration is for example set, based on a heat treatment temperature during gas carburizing, to a value larger than a target concentration of carbon in the surface of the workpiece 7; the target concentration of carbon is needed to obtain a desired hardness of the surface of the workpiece 7.

Each of the injection nozzles 51A, 51B, and 52 has a circular injection opening, so that, from the injection opening of each of the injection nozzles 51A, 51B, and 52, the carburizing gas G is injected to be conically spread.

When the carburizing gas G is perpendicularly injected from each of the injection nozzles 51A, 51B, and 52 to the surface of the workpiece 7, a carburized surface, i.e. a carburized range, of the workpiece 7 having the solid solubility limit concentration for the corresponding nozzle is formed as a circular surface having a solid solubility limit surface area.

The solid solubility limit surface area is expressed as an area of a portion of the surface of the workpiece 7; the portion has the solid solubility limit concentration.

Let us assume that the whole of the carburizing gas G injected from each of the injection nozzles 51A, 51B, and 52 collides with the surface of the workpiece 7. In this assumption, the solid solubility limit surface area for each of the nozzles 51A, 51B, and 52 and the flow rate of the carburizing gas G injected from the corresponding nozzle has a predetermined correlation that, the greater the injection flow rate of the carburizing gas G, the larger the solid solubility limit surface area.

Note that the velocity of flow of the carburizing gas G injected from each of the injection nozzles 51A, 51B, and 52 is previously set to a value at which the entire carburizing gas G injected from the corresponding injection nozzle collides with the surface of the workpiece 7.

The carburized range of the workpiece 7, which has the solid solubility limit concentration, includes not only a first range of the surface of the workpiece 7 with which the carburizing gas G has directly collided, but also a second range of the surface of the workpiece 7 on which the carburizing gas G that has collided with the surface of the workpiece 7 is spread. As a distance from each of the injection nozzle 51A, 51B, and 52 to the surface of the workpiece 7 is reduced, the carburized range of the workpiece 7, which has the solid solubility limit concentration, includes the larger second range of the surface of the workpiece 7 on which the carburizing gas G that has collided with the surface of the workpiece 7 is spread.

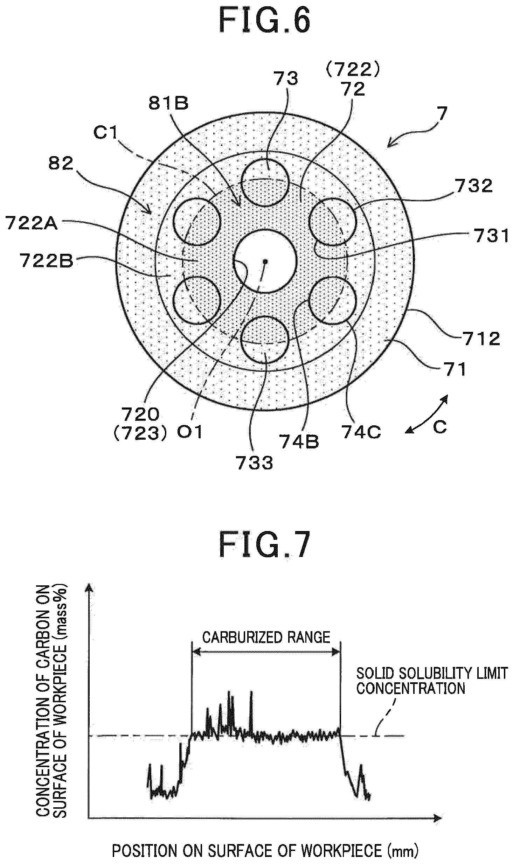

Fig. 7 illustrates a measurement result of a concentration of carbon in a surface of an experiment workpiece 7, the surface of which has been subjected to gas carburizing based on injection of the carburizing gas G from an experiment injection nozzle.

In particular, Fig. 7 illustrates that a carburized range, which has the solid solubility limit concentration as the limit of concentration of carbon to be carburized, has been formed on a cross section of the surface of the workpiece; the cross section contains a center position of the carburizing gas G that has collided with the surface of the experiment workpiece 7. A position variable on the surface of the experiment workpiece 7 represents a width on the cross section, and the carburized range is expressed as a diameter of the carburized range having the solid solubility limit concentration.

As shown in Fig. 7, the surface of the experiment workpiece 7, with which the carburizing gas G has been in contact, includes a specific carbon-concentration range, which has a given length, within a predetermined carbon-concentration range that has a prescribed fluctuation width. The specific carbon-concentration range having the given length is determined as the carburized range having the solid solubility limit concentration.

Note that, due to, for example, measurement errors, the carburized range having the solid solubility limit concentration on the surface of the experiment workpiece 7 also includes one or more portions at each of which the concentration of carbon is out of the concentration range having the predetermined fluctuation width.

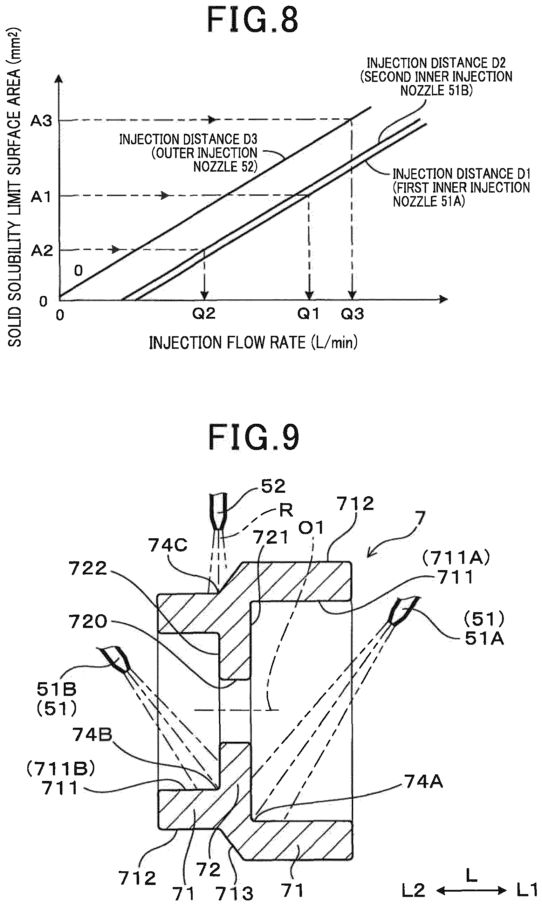

Fig. 8 shows how the solid solubility limit surface area is changed when an injection flow rate of the carburizing gas G injected from the experiment injection nozzle to the surface of the experiment workpiece 7 is changed. Fig. 8 also illustrates that how the solid solubility limit surface area is changed when an injection distance is changed as appropriate. The injection distance represents a distance from a tip, i.e. the injection opening, of the experiment injection nozzle to the surface of the workpiece 7.

As a result of the experiment, it has been found that, as the injection flow rate is increased, the solid solubility limit surface area is increased, and as the injection distance is reduced, the solid solubility limit surface area is increased.

On the basis of the experiment result, we have recognized that a relationship between the injection flow rate and the solid solubility limit surface area is determined to be a proportional relationship in which as the injection flow rate is increased, the solid solubility limit surface area is increased. In Fig. 8, part of the experiment result is omitted.

The present embodiment uses, as an indicator for setting a value of the injection flow rate of each of the nozzles 51A, 51B, and 52 for the gas carburizing apparatus and method, the relationship between the injection flow rate and the solid solubility limit surface area, which uses the injection distance as a parameter.

Specifically, the gas carburizing apparatus 1 is configured to use previously determined injection distance D1, injection distance D2, and injection distance D3 for the respective nozzles 51A, 51B, and 52.

The injection distance D1 represents a distance from the tip of the first inner circumferential injection nozzle 51A to a predetermined surface portion of the workpiece 7, i.e. to the first concave corner portion 74A.

The injection distance D2 represents a distance from the tip of the second inner circumferential injection nozzle 51B to a predetermined surface portion of the workpiece 7, i.e. to a corresponding one of the second concave corner portions 74B.

The injection distance D3 represents a minimum distance from the tip of the outer circumferential injection nozzle 52 to a predetermined surface portion of the workpiece 7, i.e. to a corresponding one of the third concave corner portions 74C or to the outer circumferential surface 712 of a corresponding one of the reduced-diameter portions 713.

That is, each of the injection distances D1, D2, and D3 is defined as a distance or length of an extension line of the corresponding injection center axis 02 from the corresponding one of the injection nozzles 51A, 51B, and 52 to the surface of the workpiece 7.

Flow rate adjustment valves are arranged in the first inner peripheral pipe 61A, the second inner peripheral pipe 61B, and the outer peripheral pipe 62, respectively. Adjustment of the degree of opening of the flow rate adjustment valve arranged in each of the pipes 61A, 61B, and 62 enables the injection flow rate of the carburizing gas G from the corresponding one of the first inner injection nozzle 51A, the second inner injection nozzle 51B, and the outer injection nozzle 52 to be changed.

It is possible to individually set a value the injection flow rate from each of the injection nozzles 51A, 51B, and 52. Appropriately adjusting the concentration of the carburizing gas G injected from each of the injection nozzles 51A, 51B, and 52 enables carbon having the solid solubility limit concentration to be impregnated almost entirely in the surface of the workpiece 7.

The gas carburizing apparatus 1 is configured to determine a value of the injection flow rate from each of the injection nozzles 51A, 51B, and 52 of the present embodiment using a relationship between the injection flow rate from each of the injection nozzles 51A, 51B, and 52 and a corresponding value of the solid solubility limit surface area.

Specifically, the gas carburizing apparatus 1 is configured to use a previously determined first inner-circumferential relationship between the injection flow rate of the carburizing gas G from the first inner injection nozzle 51A and a first value of the solid solubility limit surface area, which will be referred to as a first inner solid solubility limit surface area. The first inner solid solubility limit surface area represents an area of a portion of the surface of the workpiece 7 where carbon of the carburizing gas G from the first inner injection nozzle 51A is enabled to be in a solid-state solution with the solid solubility limit concentration in the portion of the surface of the workpiece 7.

The gas carburizing apparatus 1 is also configured to use a previously determined second inner-circumferential relationship between the injection flow rate of the carburizing gas G from the second inner injection nozzle 51B and a second value of the solid solubility limit surface area, which will be referred to as a second inner solid solubility limit surface area. The second inner solid solubility limit surface area represents an area of a portion of the surface of the workpiece 7 where carbon of the carburizing gas G from the second inner injection nozzle 51A becomes possible to be in a solid-state solution with the solid solubility limit concentration in the portion of the surface of the workpiece 7.

The gas carburizing apparatus 1 is further configured to use a previously determined outer-circumferential relationship between the injection flow rate of the carburizing gas G from the outer injection nozzle 52 and a value of the solid solubility limit surface area, which will be referred to as an outer solid solubility limit surface area. The outer solid solubility limit surface area represents an area of a portion of the surface of the workpiece 7 where carbon of the carburizing gas G from the outer injection nozzle 52 becomes possible to be in a solid-state solution with the solid solubility limit concentration in the portion of the surface of the workpiece 7.

Each of the first inner-circumferential relationship, the second inner-circumferential relationship, and the outer-circumferential relationship is determined when the entire carburizing gas G injected from the corresponding one of the injection nozzles 51A, 51B, and 52 collides with the corresponding portion of the workpiece 7.

The gas carburizing apparatus 1 is configured to set the injection flow rate of the carburizing gas G from each of the injection nozzles 51A, 51B, and 52 such that the total surface area of the workpiece 7 is equal to or smaller than the sum of the first inner-circumferential solid solubility limit surface area, the second inner-circumferential solid solubility limit surface area, and the outer-circumferential solid solubility limit surface area.

This configuration enables carbon in the carburizing gas G injected from each of the injection nozzles 51A, 51B, and 52 to be diffused and permeated into the corresponding portion of the surface of the workpiece 7 so as to have the solid solubility limit concentration. This configuration also enables variations in the concentration of carbon among portions of the surface of the workpiece 7 to be reduced as small as possible.

As shown in Fig. 4, the arrangement positions, arrangement directions, and injection flow rates of the respective injection nozzles 51A, 51B, and 52 are determined in accordance with the shape of the workpiece 7 having the cylindrical portion 71, the crossover portion, i.e. the bottom portion, 72, and the convex portions 73 so that the carburizing gas G injected from each nozzle is in contact with portions of the corresponding inner or outer circumference surface of the workpiece 7.

In the workpiece 7 having the cylindrical portion 71, the carburizing gas G is less likely to reach portions of the inner circumferential surface.

In particular, it has been known that, in the workpiece 7 having the cylindrical portion 71, the crossover portion, i.e. the bottom portion, 72, and the convex portions 73, the carburizing gas G is less likely to reach (i) a first concave corner portion 74A, (ii) second concave corner portions 74B, and (iii) third concave corner portions 74C.

The first concave corner portion 74A is a corner portion of the inner-circumferential surface, and is located at an inner periphery of a boundary between the cylindrical portion 71 and the crossover portion 72.

Each second concave corner portion 74B is a corner portion of the inner-circumferential surface, and is located at an inner periphery of a boundary between the crossover portion 72 and the corresponding one of the convex portions 73.

Each third concave corner portion 74C is a corner portion of the outer-circumferential surface, and is located at an outer periphery of the boundary between the crossover portion 72 and the corresponding one of the convex portions 73.

From this viewpoint, the injection directions of the carburizing gases G from the respective injection nozzles 51A, 51B, and 52 are determined so that the carburizing gases G are more likely to be permeated into the respective concave corner portions 74A, 74B, and 74C.

As shown in Fig. 1, the location of the first concave corner portion 74A of the workpiece 7 on its cross section along the axial direction L of the workpiece 7 is included within a predetermined injection range R of the carburizing gas G from the first inner injection nozzle 51A.

Similarly, the location of each second concave corner portion 74B of the workpiece 7 on its cross section along the axial direction L of the workpiece 7 is included within a predetermined injection range R of the carburizing gas G from the second inner injection nozzle 51B.

Additionally, the location of each third concave corner portion 74C of the workpiece 7 on its cross section along the axial direction L of the workpiece 7 is included within a predetermined injection range R of the carburizing gas G from the outer injection nozzle 52.

Because the concave corner portions 74A, 74B, and 74C are within the injection ranges R from the injection nozzles 51A, 51B, and 52, respectively, gas carburizing of the concave corner portions 74A, 74B, and 74C can be effectively performed.

As shown in Fig. 6, each second concave corner portion 74B refers to a corner portion formed between the crossover portion 72 and an inner peripheral side surface 731 of the corresponding one of the convex portions 73. The inner peripheral side surface 731 of a convex portion 73 represents an inner periphery of the inner portion of the convex portion 73; the inner peripheral side surface 731 has a central angle of 180 degrees, and is located closer to the center axis O1.

Similarly, as shown in Fig. 6, each third concave corner portion 74C refers to a corner portion formed between the crossover portion 72 and an outer peripheral side surface 732 of the corresponding one of the convex portions 73. The outer peripheral side surface 732 of a convex portion 73 represents an outer periphery of the outer portion of the convex portion 73; the outer peripheral side surface 732 has a central angle of 180 degrees, and is located farther than the center axis O1.

As shown in Fig. 2, the arrangement direction of the first inner injection nozzle 51A is set to enable the carburizing gas G sprayed from the first inner injection nozzle 51A to collide with a lower portion of the workpiece 7, which is located on the lower side of the first concave corner portion 74A.

Because the workpiece 7 is rotated at a constant speed by the rotation support member 3, during one turn of the workpiece 7, the injection range R of the carburizing gas G from the first inner injection nozzle 51A has passed through the entire periphery of the first concave corner portion 74A.

As shown in Fig. 3, the arrangement direction of the second inner injection nozzle 51B is set to enable the carburizing gas G sprayed from the second inner injection nozzle 51B to collide with at least one of the second concave corner portions 74B located on the lower side of the workpiece 7.

Because the workpiece 7 is rotated at a constant speed by the rotation support member 3, during one turn of the workpiece 7, the injection range R of the carburizing gas G from the second inner circumferential injection nozzle 51B has passed through all the second concave corner portions 74B.

As shown in Fig. 3, the arrangement direction of the outer circumferential injection nozzle 52 is set to enable the carburizing gas G sprayed from the outer injection nozzle 52 to collide with at least one of the reduced-diameter portions 713 and at least one of the third concave corner portions 74C located on the upper side of the workpiece 7.

Because the workpiece 7 is rotated at a constant speed by the rotation support member 3, during one turn of the workpiece 7, the injection range R of the carburizing gas G from the outer circumferential injection nozzle 52 has passed through all the third concave corner portions 74C.

In the gas carburizing apparatus 1 and the gas carburizing method, the entire surface of the workpiece 7, at which the carburizing gases G from the respective injection nozzles 51A, 51B, and 52 are arrived, is divided into several sections.

Specifically, as shown in Figs. 4 to 6, the crossover portion 72 has a first end surface 721 directed to the first side L1 of the axial direction, and a second end surface 722, which is opposite to the first end surface 721, directed to the second side L2 of the axial direction L. In the workpiece 7, the combination of the inner circumferential surface 711 of the cylindrical portion 71 and the first end surface 721 of the crossover portion 72 is defined as a first inner side surface 81A. That is, the first inner side surface 81A includes the first concave corner portion 74A.

The second end surface 722 of the crossover portion 72 is comprised of an inner half section 722A and an outer half section 722B.

In the workpiece 7, the combination of the inner peripheral side surfaces 731 of the convex portions 73 and the inner half section 722A of the second end surface 722 is defined as a second inner side surface 81B. That is, the second inner side surface 81B includes the second concave corner portions 74B.

In the workpiece 7, the combination of the outer circumferential surface 712 of the cylindrical portion 71, the outer peripheral side surface 732 of each convex portion 73, and the outer half section 722B of the second end surface 722 is defined as an outer side surface 82. The outer side surface 82 includes the third concave corner portions 74C.

As shown in Fig. 6, the inner peripheral side surface 731 of each convex portion 73 is defined as a side surface of the inner portion of the corresponding convex portion 73; the inner portion has a central angle of 180 degrees, and is located closer to the center axis O1. The inner half section 722A of the second end surface 722 of the crossover portion 72 is defined as a first portion of the second end surface 722; the first portion is located on the inner peripheral side of a virtual circle C1 that passes through a boundary between the inner peripheral side surface 731 and the outer peripheral side surface 732 of each convex portion 73.

As shown in Fig. 6, the outer peripheral side surface 732 of each convex portion 73 is defined as a side surface of the outer portion of the corresponding convex portion 73; the outer portion has a center angle of 180 degrees, and is located farther from the center axis O1. The outer half section 722B of the second end surface 722 of the crossover portion 72 is defined as a second portion corresponding to the remaining portion of the second side surface 722 excluding the inner half section 722A; the second portion is located on the outer peripheral side of the virtual circle C1.

Each of the gas carburizing apparatus 1 and the gas carburizing method of the present embodiment is designed to identify the surface area of the portion of the workpiece 7 to be subjected to gas carburizing based on the carburizing gas G injected from each of the injection nozzles 51A, 51B, and 52, and determine the injection flow rate of the carburizing gas G injected from each of the injection nozzles 51A, 51B, and 52 assuming that
1. The first inner side surface 81A is subjected to gas carburizing by the carburizing gas G injected from the first inner injection nozzle 51A
2. The second inner side surface 81B is subjected to gas carburizing by the carburizing gas G injected from the second inner injection nozzle 51B
3. The outer surface 82 is subjected to gas carburizing by the carburizing gas G injected from the outer injection nozzle 52

As shown in Fig. 4, the entire surface of the workpiece 7 includes (i) a first end surface 714 of the cylindrical portion 71, (ii) an inner peripheral surface 723 of the crossover portion 72, which defining the through hole 720, and (iii) a convex end surface of each convex portion 73 directed toward the second side L2 of the axial direction L in addition to the first inner side surface 81A, second inner side surface 81B, and outer side surface 82.

The first end surface 714 can be subjected to gas carburizing by either the carburizing gas G injected from the first inner injection nozzle 51A or the carburizing gas G injected from the outer injection nozzle 52.

The inner peripheral surface 723 of the crossover portion 72 can be subjected to gas carburizing by either the carburizing gas G injected from the first inner injection nozzle 51A or the carburizing gas G injected from the second inner injection nozzle 51B.

The convex end surface 733 of each convex portion 73 can be subjected to gas carburizing by either the carburizing gas G injected from the second inner injection nozzle 51B or the carburizing gas G injected from the outer injection nozzle 52.

Furthermore, as shown in Fig. 6, a boundary or its vicinity between the inner half section 722A of the second end surface 722 in the second inner side surface 81B and the outer half section 722B of the second end surface 722 in the outer side surface 82, which is adjacent to the virtual circle C1 can be subjected to gas carburizing by either the carburizing gas G injected from the second inner injection nozzle 51B or the carburizing gas G injected from the outer injection nozzle 52.

The carburizing gas G injected from each of the injection nozzles 51A, 51B, and 52 is designed to collide with a corresponding portion of the surface of the workpiece 7 and thereafter is spread in the surface of the workpiece 7. For this reason, one or more parts of the surface of the workpiece 7 may be subjected to gas carburizing by the mixture of the carburizing gases G injected from the respective injection nozzles 51A, 51B, and 52.

As illustrated in Fig. 4, a surface area of the first inner surface 81A is referred to as a first inner surface area A1, a surface area of the second inner surface 81B is referred to as a second inner surface area A2, and a surface area of the outer surface 82 is referred to as an outer surface area A3. Based on the first inner surface area A1, second inner surface area A2, and outer surface area A3, an injection flow rate Q1 of the carburizing gas G from the first inner injection nozzle 51A, an injection flow rate Q2 of the carburizing gas G from the second inner injection nozzle 51B, and an injection flow rate Q3 of the carburizing gas G from the outer injection nozzle 52 determined such that
1. One of the injection flow rates Q1, Q2, and Q3 is the largest upon the corresponding one of the surface areas A1, A2, and A3 being the largest
2. One of the remaining injection flow rates is the second largest upon the corresponding one of the remaining surface areas being larger than the other thereof
3. The finally remaining injection flow rate is the smallest

For example, in the present embodiment, the outer surface area A3 is set to be the largest, the first inner surface area A1 is the second largest, and the second inner surface areas A2 is set to be the smallest, which can be expressed by the relation A3 > A1 > A2.

This therefore results in the injection flow rate Q3 of the outer injection nozzle 52 being the highest, the injection flow rate Q1 of the first inner injection nozzle 51 being the second highest, and the injection flow rate Q2 of the second inner nozzle 52 being the lowest, which can be expressed by the relation Q3 > Q1 > Q2.

The present embodiment is configured to set the injection flow rate Q1, Q2, Q3 from each of the injection nozzles 51A, 51B, 52 in accordance with the surface areas A1, A2, and A3 of selected portions of the workpiece 7; each of the selected portions is subjected to gas carburizing by the carburizing gas G of the corresponding one of the injection nozzles 51A, 51B, and 52. This configuration enables the carburizing gas G having a required flow-rate to be supplied to each of the selected portions of the surface of the workpiece 7. This enables any part of the surface of the workpiece 7 to have a more uniform concentration of carbon.

The solid solubility limit surface area varies in accordance with a relationship with the injection distance in addition to the relationship with the injection flow rate. As the injection distance is increased, the solid solubility limit surface area on the surface of the workpiece 7 decreases. This therefore requires an increase in the injection flow rate with an increase of the injection distance to thereby ensure a required value of the solid solubility limit surface area.

The injection flow rate Q1, Q2, Q3 from each of the injection nozzles 51A, 51B, and 52 is determined in accordance with the corresponding solid solubility limit surface area and the corresponding injection distance. In particular, in order to facilitate the setting of each of the injection flow rates Q1, Q2, and Q3, the followings are determined:
1. A minimum distance from the tip of the corresponding one of the injection nozzles 51A, 51B, and 52 to a corresponding portion of the surface of the workpiece 7 as the corresponding one of the injection distances D1, D2, and D3 first
2. A relationship between the corresponding one of the injection flow rates Q1, Q2, and Q3 and the corresponding solid solubility limit surface area while the distance from the tip of the corresponding one of the injection nozzles 51A, 51B, and 52 to the surface of the workpiece 7 is set to the corresponding one of the injection distances D1, D2, and D3 next

More specifically, as shown in Figs. 1 to 3, a distance of the injection center axis 02 of the carburizing gas G from the tip of the first inner circumferential injection nozzle 51A to the first concave corner portion 74A is determined as the first inner injection distance D1.

A distance of the injection center axis 02 of the carburizing gas G from the tip of the second inner circumferential injection nozzle 51B to a corresponding one of the second concave corner portions 74B is also determined as the second inner injection distance D2.

A distance of the injection center axis 03 of the carburizing gas G from the tip of the outer circumferential injection nozzle 52 to a predetermined surface portion of the workpiece 7, i.e. to a corresponding one of the third concave corner portions 74C, is further determined as the outer injection distance D3.

In the present embodiment, the outer injection distance D3 is set to be smallest, the second inner injection distance D2 is set to be larger than the outer injection distance D3, and the first inner injection distance D1 is set to be largest, which can be expressed by the relation D3 < D2 < D1.

As shown in Fig. 8, a measurement experiment using the experiment injection nozzle and the experiment workpiece 7 was carried out. The measurement experiment measured values of the solid solubility limit surface area while changing a value of the injection flow rate of the experiment injection nozzle with the injection distance being set to the first inner injection distance D1. Then, the measurement experiment obtained a relation, i.e. a relation graph, between the values of the injection flow rate and measured values of the solid solubility limit surface area. Substituting the first inner surface area A1 into the obtained relation was used to determine the injection flow rate Q1 of the first inner injection nozzle 51A.

Additionally, as shown in Fig. 8, the measurement experiment, which uses the experiment injection nozzle and the experiment workpiece 7, measured values of the solid solubility limit surface area while changing a value of the injection flow rate of the experiment injection nozzle with the injection distance being set to the second inner injection distance D2. Then, the measurement experiment obtained a relation, i.e. a relation graph, between the values of the injection flow rate and measured values of the solid solubility limit surface area. Substituting the second inner surface area A2 into the obtained relation was used to determine the injection flow rate Q2 of the second inner injection nozzle 51B.

As shown in Fig. 8, the measurement experiment, which uses the experiment injection nozzle and the experiment workpiece 7, measured values of the solid solubility limit surface area while changing a value of the injection flow rate of the experiment injection nozzle with the injection distance being set to the outer injection distance D3. Then, the measurement experiment obtained a relation, i.e. a relation graph, between the values of the injection flow rate and measured values of the solid solubility limit surface area. Substituting the outer surface area A3 into the obtained relation was used to determine the injection flow rate Q3 of the outer injection nozzle 52.

### Manufacturing method

Next, the following describes a method of performing gas carburizing using the gas carburizing apparatus 1.

First, the workpiece 7 is placed at a portion of the rotation support member 3 located outside the carburizing container 2. At this time, the cylindrical portion 71 of the workpiece 7 is placed over the pair of rotation shaft members 31 of the rotation support member 3.

Next, the pair of rotation shaft members 31 are slid in the axial direction L by an actuator, and the workpiece 7 placed on the pair of rotation shaft members 31 is carried in the housing chamber 21 from the inlet 211 of the carburizing container 2.

While the workpiece 7 is placed in the housing chamber 21, the first inner injection nozzle 51A is located to face the first-side (L1) end of the workpiece 7 in the axial direction L from obliquely above, the second inner injection nozzle 51B is located to face the second-side (L2) end of the workpiece 7 in the axial direction L from obliquely above, and the outer injection nozzle 52 is located to face the outer circumferential surface 712 of the cylindrical portion 71 of the workpiece 7 from above.

Next, the pair of rotation shaft members 31 are rotated by the motor, and the rotation of the pair of rotation shaft members 31 causes the workpiece 7 to rotate around the center axis O1 thereof.

When the workpiece 7 is rotated, an electric current is applied to the induction heating coil 4 to thereby heat the workpiece 7, and the carburizing gas G is injected from each of the injection nozzles 51A, 51B, and 52.

Specifically, the carburizing gas G injected from the first inner ion nozzle 51A collides with the first concave corner portion 74A of the workpiece 7, which is located on the lower side of the cylindrical portion 71 of the rotating workpiece 7. The carburizing gas G injected from the second inner injection nozzle 51B collides with the second concave corner portions 74B of the rotating workpiece 7 or the second end surface of the crossover portion 72 located on the lower side of the rotating workpiece 7.

In addition, the carburizing gas G injected from the outer injection nozzle 52 collides with the outer circumferential surface 712 of the rotating workpiece 7, which is located on the upper side of the cylindrical portion 71 of the rotating workpiece 7.

Then, the workpiece 7 is rotated multiple times by the pair of rotation shaft members 31 so that the carburizing gas G injected from each of the nozzles 51A, 51B, and 52 is in contact with corresponding portions of the workpiece 7 in a circumferential direction C of the workpiece 7 as uniformly as possible.

Next, when a predetermined time has elapsed since the carburizing gas G was injected from each of the injection nozzles 51A, 51B, and 52, the rotation of the workpiece 7 by the pair of rotation shaft members 31, the heating of the workpiece 7 by the induction heating coil 4, and the injection of the carburizing gas G from the injection nozzles 51A, 51B, and 52 are stopped.

Next, the pair of rotation shaft members 31 are slid in the axial direction L by the actuator, and the workpiece 7 placed on the pair of rotation shaft members 31 is moved out of the housing chamber 21 from the outlet 212 of the carburizing container 2 and moved into a cooling chamber.

In the cooling chamber, the workpiece 7 is immersed in oil to be rapidly cooled, and the cooled workpiece 7 is carburized and quenched.

Subsequently, the workpiece 7, which has been carburized and quenched, is removed from the cooling chamber, so that the gas carburizing of the workpiece 7 is terminated. The method set forth above results in a steel product comprised of the workpiece 7, the entire surface of which has been carburized, being manufactured.

### Advantageous effects

The gas carburizing apparatus 1 of the present embodiment includes the special injection nozzles 51A, 51B, and 52 each specialized for performing gas carburizing of the workpiece 7 having the cylindrical portion 71 and the plurality of convex portions 73.

Specifically, the gas carburizing apparatus 1 includes
1. The first inner circumferential injection nozzle 51A that injects the carburizing gas G to an inner side of the cylindrical portion 71 of the workpiece 7
2. The second inner circumferential injection nozzle 51B that injects the carburizing gas G to an inner side of each of the convex portions 73 of the workpiece 7
3. The outer circumferential injection nozzle 52 that injects the carburizing gas G to an outer side of the cylindrical portion 71 and an outer side of each of the convex portions 73 of the workpiece 7

The gas carburizing apparatus 1 causes the carburizing gas G injected from the first inner nozzle 51A to collide with the first concave corner portion 74A between the cylindrical portion 71 and the crossover portion 72 of the rotating work piece 7. This collision of the carburizing gas G with the rotating workpiece 7 enables the first concave corner portion 74A, which extends all over the workpiece 7 in the circumferential direction C thereof, to be carburized by carbon in the carburizing gas G injected from the first inner injection nozzle 51A.

The gas carburizing apparatus 1 also causes the carburizing gas G injected from the second inner injection nozzle 51B to collide with the second concave corner portions 74B between the crossover portion 72 and the respective convex portions 73. This collision of the carburizing gas G with the rotating workpiece 7 enables the second concave corner portion 74B of each of the convex portions 73, which are arranged in the circumferential direction C of the workpiece 7, to be carburized by carbon in the carburizing gas G injected from the second inner injection nozzle 51B.

In addition, the gas carburizing apparatus 1 causes the carburizing gas G injected from the outer injection nozzle 52 to collide with the third concave corner portions 74C between the crossover portion 72 and the respective convex portions 73. This collision of the carburizing gas G with the rotating workpiece 7 enables the third concave corner portions 74C formed between (i) the outer circumferential surface 712 extending all over the workpiece 7 in the circumferential direction C thereof and (ii) the respective convex portions 73 arranged in the circumferential direction C of the workpiece 7 to be carburized by carbon in the carburizing gas G injected from the outer injection nozzle 52.

Accordingly, the above configuration of the carburizing apparatus 1 causes the carburizing gas G to collide with each of the first to third concave corner portions 74A, 74B, and 74C at an appropriate injection flow rate; each of the first to third concave corner portions 74A, 74B, and 74C is a specific place of the workpiece 7 where carburizing gas is less likely to be in contact with so as to be less likely to be carburized. This therefore enables the carburizing gas G to be appropriately diffused and permeated into each of the first to third concave corner portions 74A, 74B, and 74C.

Each of the gas carburizing apparatus 1 and the gas carburizing method according to the present embodiment therefore makes it possible to perform carburizing of the entire surface of the workpiece 7 as uniformly as possible.

### Second embodiment

The following describes the second embodiment. The gas carburizing apparatus 1 according to the second embodiment is configured such that arrangement of each of the injection nozzles 51A, 51B, and 52 is adjusted to address a case where a workpiece 7 of the second embodiment has a shape that is different from the shape of the workpiece 7 according to the first embodiment.

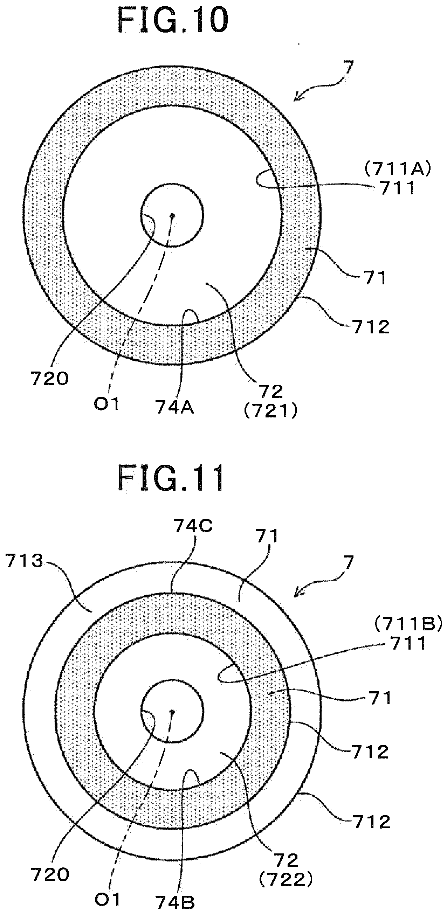

As shown in Figs. 9 to 11, the workpiece 7 of the second embodiment has the cylindrical portion 71 and the crossover portion, i.e. joint portion, 72 provided on an inner peripheral side of an intermediate portion of the cylindrical portion 71 in the axial direction L. The crossover portion 72 is joined to the entire periphery of the inner circumferential surface 711 of the cylindrical portion 71. The through hole 720 is formed at the center portion of the crossover portion 72.

The crossover portion 72 partitions the inner circumferential surface 711 of the cylindrical portion 71 into a first side portion 711A and a second side portion 711B in the axial direction L.

The first concave corner portion 74A of the second embodiment is formed as an inner boundary portion, i.e. an inner corner portion, between the cylindrical portion 71 and the crossover portion 72; the first concave corner potion 74A is located to be closer to the first-side end of the cylindrical portion 71 than the crossover portion 72 is.

The second concave corner portion 74B of the present embodiment is formed as an inner boundary portion, i.e. an inner corner portion, between the cylindrical portion 71 and the crossover portion 72; the second concave corner potion 74B is located to be closer to the second-side end of the cylindrical portion 71 than the crossover portion 72 is.

The third concave corner portion 74C of the second embodiment is configured as a step portion of the outer circumferential surface 712 of the cylindrical portion 71.

As shown in Fig. 9, the inner injection nozzles 51A and 51B of the second embodiment are similarly configured as the first inner injection nozzle 51A and the second inner injection nozzle 51B of the first embodiment, respectively. The outer injection nozzle 52 of the second embodiment is similarly configured as the outer injection nozzle 52 of the first embodiment.

The location of the first concave corner portion 74A of the workpiece 7 on its cross section along the axial direction L of the workpiece 7 is included within the predetermined injection range R of the carburizing gas G from the first inner injection nozzle 51A.

Similarly, the location of each second concave corner portion 74B of the workpiece 7 on its cross section along the axial direction L of the workpiece 7 is included within the predetermined injection range R of the carburizing gas G from the second inner injection nozzle 51B.

Additionally, the location of the third concave corner portion 74C of the workpiece 7 on its cross section along the axial direction L of the workpiece 7 is included within the predetermined injection range R of the carburizing gas G from the outer injection nozzle 52.

The inner circumferential surface 711 has opposing first and second surface portions 711A and 711B; the first surface portion 711A is located to be closer to the first-side (L1) end of the cylindrical portion 71, and the second surface portion 711B is located to be closer to the second-side (L2) end of the cylindrical portion 71.

The carburizing gas G injected from the first inner injection nozzle 51A carburizes mainly the first surface portion 711A of the inner circumferential surface 711 and the first end surface 721 of the crossover portion 72. Similarly, the carburizing gas G injected from the second inner injection nozzle 51B carburizes mainly the second surface portion 711B of the inner circumferential surface 711 and the second end surface 722 of the crossover portion 72. Additionally, the carburizing gas G injected from the outer injection nozzle 52 carburizes the outer circumferential surface 712 of the cylindrical portion 71.

Like the first embodiment, the second embodiment is configured to cause the carburizing gas G to collide with each of the first to third concave corner portions 74A, 74B, and 74C at an appropriate injection flow rate; each of the first to third concave corner portions 74A, 74B, and 74C is a specific place of the workpiece 7 where carburizing gas is less likely to be in contact with so as to be less likely to be carburized. This therefore enables the carburizing gas G to be appropriately diffused and permeated into the entire surface of the workpiece 7.

The remaining configuration and advantageous effects of the gas carburizing apparatus 1 and the gas carburizing method according to the second embodiment are the same as those of the carburizing apparatus 1 and the gas carburizing method according to the first embodiment. Additionally, like reference characters are respectively assigned to like parts between the first and second embodiments.

### Third embodiment

The following describes the third embodiment. The gas carburizing apparatus 1 according to the third embodiment is configured such that arrangement of each of an inner circumferential injection nozzle 51 and the outer injection nozzle 52 is adjusted to address a case where a workpiece 7 of the third embodiment has a shape that is different from the shape of the workpiece 7 according to each of the first and second embodiments.

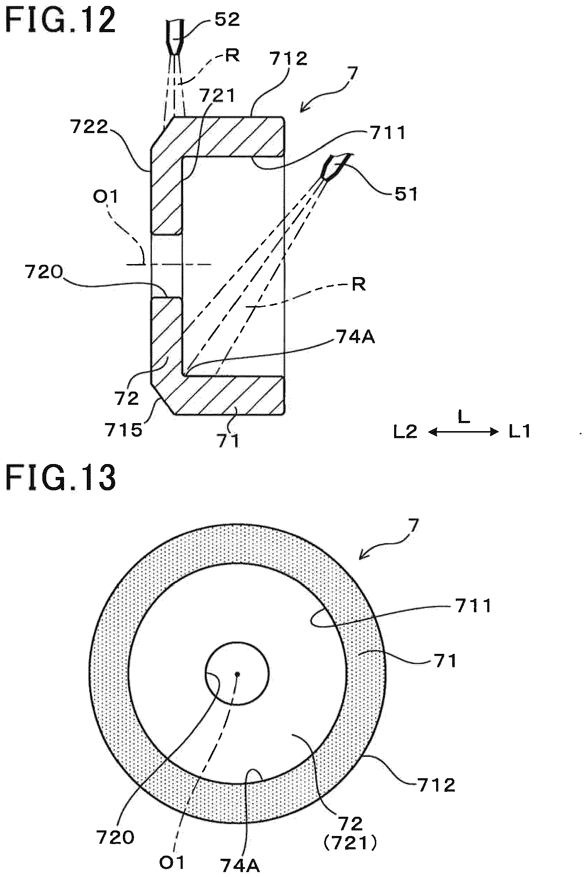

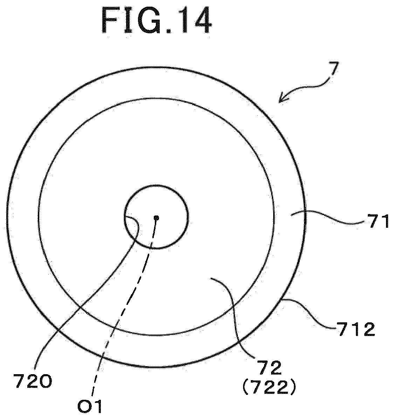

As shown in Figs. 12 to 14, the workpiece 7 of the third embodiment has the cylindrical portion 71 and the crossover portion, i.e. bottom portion, 72 joined to the second-side (L2) end of the cylindrical portion 71 in the axial direction L. That is, the workpiece 7 of the third embodiment has a bottomed cylindrical shape. The crossover portion 72 is joined to the entire periphery of the inner circumferential surface 711 of the cylindrical portion 71. The through hole 720 is formed at the center position of the crossover portion 72.

As shown in Fig. 12, a concave corner portion 74A of the third embodiment is formed as an inner boundary portion, i.e. an inner corner portion, between the cylindrical portion 71 and the crossover portion 72.

The inner circumferential injection nozzle 51 of the third embodiment is configured to inject the carburizing gas G toward the concave corner portion 74A, and the outer circumferential injection nozzle 52 of the third embodiment is configured to inject the carburizing gas G toward an outer corner portion 715 between the cylindrical portion 71 and the crossover portion 72.

The location of the concave corner portion 74A of the workpiece 7 on its cross section along the axial direction L of the workpiece 7 is included within the predetermined injection range R of the carburizing gas G from the inner injection nozzle 51. Similarly, the location of the outer corner portion 715 of the workpiece 7 on its cross section along the axial direction L of the workpiece 7 is included within the predetermined injection range R of the carburizing gas G from the outer injection nozzle 52.

The inner circumferential surface 711 of the cylindrical portion 71 and the inner end surface 721 of the crossover portion 72 are mainly carburized by the carburizing gas G injected from the inner injection nozzle 51. In addition, the outer circumferential surface 712 of the cylindrical portion 71 and the outer end surface 722 of the crossover portion 72 are mainly carburized by the carburizing gas G injected from the outer injection nozzle 52.

The third embodiment is configured to cause the carburizing gas G to collide with the concave corner portion 74A at an appropriate injection flow rate; the concave corner portion 74A is a specific place of the workpiece 7 where carburizing gas is less likely to be in contact with so as to be less likely to be carburized. This therefore enables the carburizing gas G to be appropriately diffused and permeated into the entire surface of the workpiece 7.

The remaining configuration and advantageous effects of the gas carburizing apparatus 1 and the gas carburizing method according to the third embodiment are the same as those of the carburizing apparatus 1 and the gas carburizing method according to the first embodiment. Additionally, like reference characters are respectively assigned to like parts between the first and third embodiments.

### Modifications

The gas carburizing apparatus 1 of the first embodiment can be configured such that the reduced-diameter portion 713 is within the injection range R from the outer injection nozzle 52, while the third concave corner portion 74C is out of the injection range R from the outer injection nozzle 52. The third concave corner portion 74C of this modification is located to be adjacent to the injection range R of the outer injection nozzle 52, making it possible to appropriately diffuse and permeate carbon in the carburizing gas G in the third concave corner portion 74C.

The rotation support member 3 can be configured to support the center position of the workpiece 7 to directly rotate the workpiece 7. This modification makes it possible to slide the rotation support member 3 in the axial direction L to thereby transfer the workpiece 7.

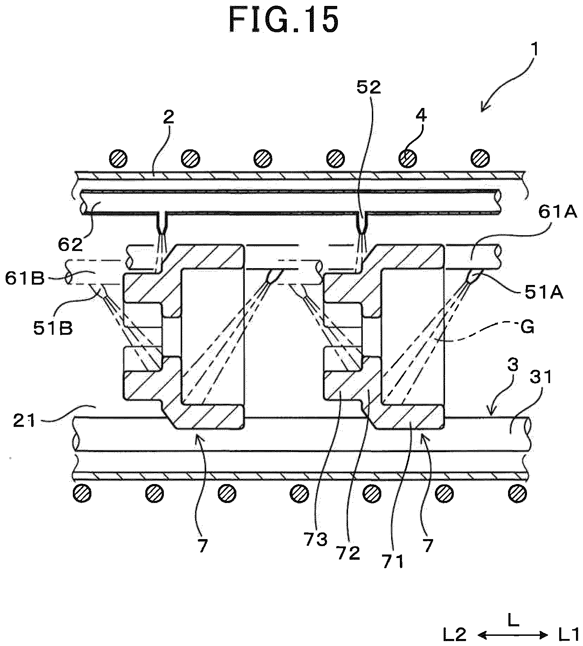

As shown in Fig. 15, the gas carburizing apparatus 1 can be configured to simultaneously perform gas carburizing of a plurality of workpieces 7. The carburizing container 2 of this modification can include plural sets of first inner injection nozzles 51A, second inner injection nozzles 51B, and outer injection nozzles 52.

The first inner injection nozzles 51A can be formed to be separately protruded from a plurality of corresponding portions of the first inner peripheral pipe 61A in the axial direction L.

The second inner injection nozzles 51B can be formed to be separately protruded from a plurality of corresponding portions of the second inner peripheral pipe 61B in the axial direction L.

The outer injection nozzles 52 can be formed to be separately protruded from a plurality of corresponding portions of the outer peripheral pipe 62 in the axial direction L.

While the plurality of workpieces 7 are simultaneously rotated by the pair of rotation shaft members 31 of the rotation support member 3, the carburizing gases G are injected from the three injection nozzles 51A, 51B, and 52 of each set to the corresponding one of the workpieces 7. This modification makes it possible to improve productivity of steel products each comprised of a corresponding one of the workpieces 7; the entire surface of each of the workpieces 7 has been carburized.

The remaining configuration and advantageous effects of the gas carburizing apparatus and the gas carburizing method according to each modification are the same as those of the carburizing apparatus 1 and the gas carburizing method according to the first embodiment. Additionally, like reference characters are respectively assigned to like parts between the first embodiment and each modification.

### Demonstration Test

We performed a demonstration test that carburized the surface of the workpiece 7 using the gas carburizing apparatus 1, i.e. an implemented product, according to the first embodiment, and demonstrated a carburized state of the surface of the workpiece 7; the workpiece 7 carburized by the implemented product will be referred to as a first workpiece 7. A value of the injection flow rate of the carburizing gas G from each of the injection nozzles 51A, 51B, and 52 of the implemented product was determined in accordance with
1. The first relation between values of the injection flow rate and values of the solid solubility limit surface area while the injection distance is set to the first inner injection distance D1
2. The second relation between values of the injection flow rate and values of the solid solubility limit surface area while the injection distance is set to the second inner injection distance D2
3. The third relation between values of the injection flow rate and values of the solid solubility limit surface area while the injection distance is set to the third inner injection distance D3

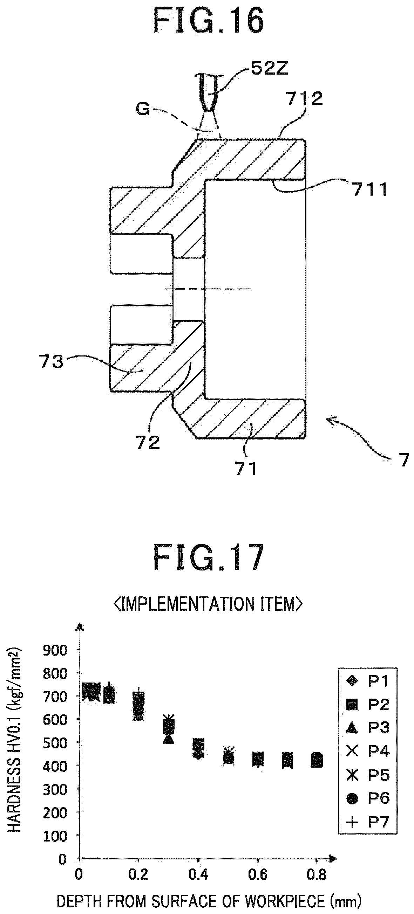

For comparison, as shown in Fig. 16, a comparative demonstration test was performed in which
1. An injection nozzle 52Z of a comparative gas carburizing apparatus, i.e. a comparative product, according to a comparative example, was used to inject a carburizing gas G to thereby carburize the surface of the workpiece 7
2. A carburized state of the surface of the workpiece 7 was analyzed

The value of the injection flow rate of the carburizing gas G from the injection nozzle 52Z is set to be substantially the same as the total of the values of the respective nozzles 51A, 51B, and 52 of the implemented product; the workpiece 7 carburized by the comparative product will be referred to as a second workpiece 7.

The carburized state of the first workpiece 7, which was subjected to gas carburizing using the implemented product and the carburized state of the second workpiece 7, which was subjected to gas carburizing using the comparative produce were confirmed. Measuring the hardness of the surface of each of the first and second workpieces 7 resulted in the carburized state of the surface of each of the first and second workpieces 7 being demonstrated. It is known that, as the surface of a workpiece 7 has a higher concentration of carbon, the surface of the workpiece 7 has a higher level of hardness.

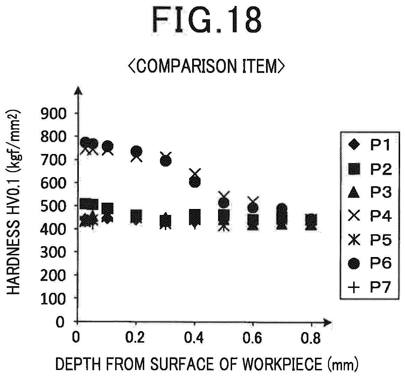

Fig. 17 illustrates, as a graph, the measured result of the hardness of the surface of the first workpiece 7, which was subjected to gas carburizing using the implemented product. In contrast, Fig. 18 illustrates, as a graph, the measured result of the hardness of the surface of the second workpiece 7, which was subjected to gas carburizing using the comparative product.

Each of the graphs has a horizontal axis representing a distance, i.e. a depth, (mm) from the surface of the corresponding one of the first and second workpieces 7, and a vertical axis representing Vickers hardness HV0.1 (kgf/mm²), which is an indicator representing the hardness of the surface of each of the first and second workpieces 7. The Vickers hardness HV0.1 is expressed as a level of the hardness of the surface of a tested object when test force of 0.1 kgf is applied thereto.

As illustrated in Fig. 4, levels of hardness in respective portions of the surface of each of the first and second workpieces 7 were measured; the portions include
1. The first portion, which is referred to as P1, is a selected second concave corner portion 74B between a selected convex portion 73 and the crossover portion 72
2. The second portion, which is referred to as P2, is a selected third concave corner portion 74C between a selected convex portion 73 and the crossover portion 72
3. The third portion, which is referred to as P3, is the first concave corner portion 74A between the cylindrical portion 71 and the crossover portion 72
4. The fourth portion, which is referred to as P4, is the outer circumferential surface 712 of the cylindrical portion 71
5. The fifth portion, which is referred to as P5, is the inner circumferential surface 711 of the cylindrical portion 71
6. The sixth portion, which is referred to as P6, is the outer peripheral side surface 732 of the convex portion 73
7. The seventh portion, which is referred to as P7, is the first end surface 721 of the crossover portion 72

Fig. 18 for the comparison product demonstrates that
1. The hardness of each of the fourth portion P4 representing the outer circumferential surface 712 of the cylindrical portion 71 and the sixth portion P6 representing the outer peripheral side surface 732 of the convex portion 73 has increased
2. The hardness of each of the remaining portions P1 to P3, P5, and P7 has hardly increased

This demonstrates that the comparative gas carburizing apparatus using only the injection nozzle 52Z makes it difficult to perform gas carburizing of (i) the inner peripheral side of the cylindrical portion 71, and (ii) each of the concave corner portions 74A, 74B, and 74C of the second workpiece 7.

In contrast, Fig. 17 for the implemented product demonstrates that the levels of hardness of all of the first to seventh portions P1 to P7 of the first workpiece 7 have increased. This therefore results in the entire surfaced of the first workpiece 7 being gas carburized as uniformly as possible.

As a result of the demonstration test, the gas carburizing apparatus 1 and the gas carburizing method according to the first embodiment make it possible to perform gas carburizing of the entire surface of the first workpiece 7 as uniformly as possible.

The present disclosure is not limited to only these embodiments, and can further configure different embodiments without departing from the scope of the present disclosure. The present disclosure can include various modifications, various equivalents within the scope of the present disclosure, and the other similar variations. Additionally, various combinations and/or configurations of elements that can be derived from the present disclosure can be included within the scope of the present disclosure.

## Claims

1. A gas carburizing apparatus (1) comprising:
a carburizing container (2) that houses a workpiece (7) having a cylindrical portion (71) that has a center axis (O1), an inner circumferential surface (711), and an outer circumferential surface (712);
a rotation support member (3) for rotating the workpiece around the center axis (O1) of the cylindrical portion;
an induction heating coil (4) for induction-heating the workpiece;
at least one inner injection nozzle (51, 51A, 51B) arranged in the carburizing container and configured to inject an inner carburizing gas (G) to thereby cause the inner carburizing gas to collide with the inner circumferential surface (711) of the cylindrical portion; and
an outer injection nozzle (52) arranged in the carburizing container and configured to inject an outer carburizing gas to thereby cause the outer carburizing gas to collide with the outer circumferential surface (712) of the cylindrical portion.

2. The gas carburizing apparatus according to claim 1, wherein:
the at least one inner injection nozzle has a first injection flow rate of the inner carburizing gas;
the outer injection nozzle has a second injection flow rate of the inner carburizing gas; and
when a whole of the inner carburizing gas injected from the at least one inner injection nozzle is assumed to collide with the workpiece and a whole of the outer carburizing gas injected from the outer injection nozzle is assumed to collide with the workpiece, a value of the first injection flow rate and a value of the second injection flow rate are determined, based on a first relationship between the first injection flow rate and an inner solid solubility limit surface area of the workpiece and a second relationship between the second injection flow rate and an outer solid solubility limit surface area of the workpiece, such that a whole of a surface area of the workpiece is equal to or smaller than the sum of the inner solid solubility limit surface area and outer solid solubility limit surface area,
the inner solid solubility limit surface area being defined as an area of a portion of the workpiece where carbon of the inner carburizing gas from the inner carburizing gas is enabled to be in a solid-state solution with a solid solubility limit concentration,
the outer solid solubility limit surface area being defined as an area of a portion of the workpiece where carbon of the inner carburizing gas from the inner carburizing gas is enabled to be in a solid-state solution with a solid solubility limit concentration.

3. The gas carburizing apparatus according to claim 1 or 2, wherein:
the workpiece has at least one concave corner portion on a cross section thereof in the center axis of the cylindrical portion (74A, 74B, 74C); and
a location of the at least one concave corner portion on the cross section is included within an injection range (R) of the inner carburizing gas from the at least one inner injection nozzle or an injection range (R) of the outer carburizing gas from the outer injection nozzle.

4. The gas carburizing apparatus according to claim 1 or 2, wherein:
the at least one inner injection nozzle comprises a first inner injection nozzle (51A) and a second inner circumferential injection nozzle (51B);
the cylindrical portion has a first end directed toward a first side (L1) of the center axis (L), and a second end directed toward a second side (L2) of the center axis, the second side being opposite to the first side;
the first inner injection nozzle is configured to inject, as the inner carburizing gas, a first inner carburizing gas while being inclined to extend from a vicinity of the first end of the cylindrical portion toward a center side of the cylindrical portion;
the second inner injection nozzle is configured to inject, as the inner carburizing gas, a second inner carburizing gas while being inclined to extend from a vicinity of the second end of the cylindrical portion toward the center side of the cylindrical portion;
the workpiece has a crossover portion (72) and at least one convex portion (73) in addition to the cylindrical portion;
the crossover portion is joined to an inner peripheral side of the second end of the cylindrical portion;
the at least one convex portion is protruded from the crossover portion toward the second side of the center axis;
the workpiece has a first concave corner portion (74A) and at least one second concave corner portion (74B) on a cross section thereof in the center axis of the cylindrical portion, the first concave corner portion being located at an inner periphery of a boundary between the cylindrical portion and the crossover portion, the at least one second concave corner portion being located at an inner periphery of a boundary between the crossover portion and the at least one second inner concave corner portion on the cross section thereof in the center axis of the cylindrical portion;
the first concave corner portion (74A) is located to be within an injection range (R) of the first inner carburizing gas from the first inner injection nozzle; and
the at least one second concave corner portion (74B) is located to be within an injection range (R) of the second inner carburizing gas from the second inner injection nozzle.

5. The gas carburizing apparatus according to claim 4, wherein:
the workpiece has at least one third concave corner portion (74C) on the cross section thereof in the center axis of the cylindrical portion;
the at least one third concave corner portion is located at an outer periphery of the boundary between the crossover portion and the at least one second inner concave corner portion on the cross section thereof in the center axis of the cylindrical portion; and
the at least one third concave corner portion (74C) is located to be within an injection range (R) of the outer carburizing gas from the outer injection nozzle.

6. The gas carburizing apparatus according to any one of claims 1 to 5, wherein:
the rotation support member comprises a pair of rotation shaft members (31) that are disposed to be parallel to each other; and
the rotation shaft members are configured to be rotated while being abutted on the outer circumferential surface of the workpiece from below to thereby rotate the workpiece; and
each of the inner injection nozzle and the outer circumferential injection nozzle is configured to inject the corresponding one of the inner carburizing gas and the outer carburizing gas downward or obliquely downward.

7. A gas carburizing method comprising:
rotating a workpiece (7), which has a center axis (O1), an inner circumferential surface (711), and an outer circumferential surface (712), around the center axis using a rotation support member (3);
induction-heating the rotating workpiece using an induction heating coil (4);
causing an inner carburizing gas (G) injected from an inner injection nozzle (51, 51A, 51B) to collide with the inner circumferential surface of the cylindrical portion to perform gas carburizing of the inner circumferential surface; and
causing an outer carburizing gas injected from an outer circumferential injection nozzle (52) to collide with the outer circumferential surface (712) of the cylindrical portion to perform gas carburizing of the outer circumferential surface.

8. The gas carburizing method according to claim 7, wherein, when a whole of the inner carburizing gas injected from the at least one inner injection nozzle is assumed to collide with the workpiece and a whole of the outer carburizing gas injected from the one outer injection nozzle is assumed to collide with the workpiece, a value of a first injection flow rate of the inner carburizing gas and a value of the second injection flow rate of the outer carburizing gas are determined, based on a first relationship between the first injection flow rate and an inner solid solubility limit surface area of the workpiece and a second relationship between the second injection flow rate and an outer solid solubility limit surface area of the workpiece, such that a whole of a surface area of the workpiece is equal to or smaller than the sum of the inner solid solubility limit surface area and outer solid solubility limit surface area,
the inner solid solubility limit surface area being defined as an area of a portion of the workpiece where carbon of the inner carburizing gas from the inner carburizing gas is enabled to be in a solid-state solution with a solid solubility limit concentration,
the outer solid solubility limit surface area being defined as an area of a portion of the workpiece where carbon of the inner carburizing gas from the inner carburizing gas is enabled to be in a solid-state solution with a solid solubility limit concentration.

9. The gas carburizing method according to claim 7 or 8, wherein:
the workpiece has at least one concave corner portion on a cross section thereof in the center axis of the cylindrical portion (74A, 74B, 74C); and
a location of the at least one concave corner portion on the cross section is included within an injection range (R) of the inner carburizing gas from the at least one inner injection nozzle or an injection range (R) of the outer carburizing gas from the outer injection nozzle.

10. The gas carburizing method according to claim 7 or 8, wherein:
the at least one inner injection nozzle comprises a first inner injection nozzle (51A) and a second inner circumferential injection nozzle (51B);
the cylindrical portion has a first end directed toward a first side (L1) of the center axis (L), and a second end directed toward a second side (L2) of the center axis, the second side being opposite to the first side;
the first inner injection nozzle is configured to inject, as the inner carburizing gas, a first inner carburizing gas while being inclined to extend from a vicinity of the first end of the cylindrical portion toward a center side of the cylindrical portion;
the second inner injection nozzle is configured to inject, as the inner carburizing gas, a second inner carburizing gas while being inclined to extend from a vicinity of the second end of the cylindrical portion toward the center side of the cylindrical portion;
the workpiece has a crossover portion (72) and at least one convex portion (73) in addition to the cylindrical portion;
the crossover portion is joined to an inner peripheral side of the second end of the cylindrical portion;
the at least one convex portion is protruded from the crossover portion toward the second side of the center axis;
the workpiece has a first concave corner portion (74A) and at least one second concave corner portion (74B) on a cross section thereof in the center axis of the cylindrical portion, the first concave corner portion being located at an inner periphery of a boundary between the cylindrical portion and the crossover portion, the at least one second concave corner portion being located at an inner periphery of a boundary between the crossover portion and the at least one second inner concave corner portion on the cross section thereof in the center axis of the cylindrical portion;
the first concave corner portion (74A) is located to be within an injection range (R) of the first inner carburizing gas from the first inner injection nozzle; and
the at least one second concave corner portion (74B) is located to be within an injection range (R) of the second inner carburizing gas from the second inner injection nozzle.

11. The gas carburizing method according to claim 10, wherein:
the workpiece has at least one third concave corner portion (74C) on the cross section thereof in the center axis of the cylindrical portion;
the at least one third concave corner portion is located at an outer periphery of the boundary between the crossover portion and the at least one second inner concave corner portion on the cross section thereof in the center axis of the cylindrical portion; and
the at least one third concave corner portion (74C) is located to be within an injection range (R) of the outer carburizing gas from the outer injection nozzle.

12. The gas carburizing method according to claim 10 or 11, wherein:
the crossover portion has a first end surface 721) directed toward a first side (L1) of the center axis (L), and a second end surface (722) directed toward a second side (L2) of the center axis, the second side being opposite to the first side;
the workpiece has:
a first inner surface (81A) defined based on a combination of the inner circumferential surface of the cylindrical portion and the first side end surface of the crossover portion;
a second inner surface (81B) defined based on a combination of an inner half section of the second end surface and an inner peripheral side surface of the at least one convex portion; and
an outer surface (82) defined based on a combination of an outer peripheral side surface of the at least one convex portion and an outer half section of the second end surface;
the first inner surface is assumed to be gas carburized by the first inner carburizing gas;
the second inner surface is assumed to be gas carburized by the second inner carburizing gas;
the outer surface is assumed to be gas carburized by the outer carburizing gas;
the first inner surface has an area referred to as a first inner surface area (A1);
the second inner surface has an area referred to as a second inner surface area (A2);
the outer surface has an area referred to as an outer surface area (A3);
each of the first inner injection nozzle, the second inner injection nozzle, and the outer injection nozzle has a corresponding one of injection flow rates (Q1 to Q3);
one of the injection flow rates (Q1, Q2, and Q3) is the largest upon the corresponding one of the surface areas (A1, A2, and A3) being the largest
one of the remaining injection flow rates is larger than the other of the remaining injection flow rates upon the corresponding one of the remaining surface areas being larger than the other of the remaining surface areas; and
the finally remaining injection flow rate is the smallest.

13. The gas carburizing method according to any one of claims 7 to 12, wherein:
the rotation support member comprises a pair of rotation shaft members (31) that are disposed to be parallel to each other; and
the rotation shaft members are configured to be rotated while being abutted on the outer circumferential surface of the workpiece from below to thereby rotate the workpiece; and
each of the inner injection nozzle and the outer circumferential injection nozzle is configured to inject the corresponding one of the inner carburizing gas and the outer carburizing gas downward or obliquely downward.
